(19) Europäisches Patentamt
European Patent Office
Office européen des brevets

(11) **EP 3 605 895 B1**

(12) **EUROPEAN PATENT SPECIFICATION**

(45) Date of publication and mention
of the grant of the patent:
**11.01.2023 Bulletin 2023/02**

(21) Application number: **18777685.1**

(22) Date of filing: **26.03.2018**

(51) International Patent Classification (IPC):
**H04L 1/00** *(2006.01)* **H04L 27/26** *(2006.01)*
**H04B 3/32** *(2006.01)*

(52) Cooperative Patent Classification (CPC):
**H04B 3/32; H04L 1/00; H04L 25/03; H04L 27/26**

(86) International application number:
**PCT/CN2018/080571**

(87) International publication number:
**WO 2018/177263 (04.10.2018 Gazette 2018/40)**

(54) **PRE-CODING PROCESSING METHOD AND DEVICE, AND STORAGE MEDIUM**

VORCODIERUNGSVERARBEITUNGSVERFAHREN UND -VORRICHTUNG UND
SPEICHERMEDIUM

PROCÉDÉ ET DISPOSITIF DE TRAITEMENT DE PRÉCODAGE, ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2017 CN 201710193581**

(43) Date of publication of application:
**05.02.2020 Bulletin 2020/06**

(73) Proprietor: **ZTE Corporation
Shenzhen, Guangdong 518057 (CN)**

(72) Inventor: **LU, Liuming
Shenzhen
Guangdong 518057 (CN)**

(74) Representative: **Ricker, Mathias
Wallinger Ricker Schlotter Tostmann
Patent- und Rechtsanwälte Partnerschaft mbB
Zweibrückenstrasse 5-7
80331 München (DE)**

(56) References cited:
**WO-A1-2016/070388 WO-A1-2016/095171
CN-A- 102 025 396 JP-A- 2012 244 189
US-A1- 2015 244 418**

• **SCKIPIO TECHNOLOGIES: "G.fast: Hybrid
precoder scheme;TD2013-01-4A-052", ITU-T
DRAFT ; STUDY PERIOD 2013-2016,
INTERNATIONAL TELECOMMUNICATION
UNION, GENEVA ; CH, vol. 4a/15, 21 March 2013
(2013-03-21), pages 1-5, XP044114898, [retrieved
on 2013-03-21]**

**Description**

**TECHNICAL FIELD**

The present application relates to the field of access network technologies and, in particular, to a precoding processing method and device and a storage medium.

**BACKGROUND**

A copper cable access system includes a fast access user terminal (FAST) system and a very-high-speed digital subscriber line 2 (VDSL 2) system. The network architecture of the copper cable access system includes a G.fast/xDSL central office such as a Distribution Point Unit (DPU) and a G.fast/xDSL terminal such as a Customer Premises Equipment (CPE). Generally, the central office and the terminal are connected through a bundle of copper wires. The bundle of copper wires includes a plurality of wire pairs. For each subcarrier, the plurality of wire pairs may form a vectoring group; and one of the plurality of wire pairs is connected to one port of the central office and the port of a CPE device, respectively, and is called one line. Since a crosstalk phenomenon exists between wire pairs of the bundle of copper wires due to an electromagnetic induction phenomenon, it is proposed to eliminate the crosstalk by using a precoding (or vectoring) method. The precoding method may be divided into two types: a linear precoding method and a nonlinear precoding method. Under the circumstance that the channel condition is relatively stable, the performance of the nonlinear precoding method is relatively good (especially in a high frequency area), but nonlinear precoding is sensitive to the variability of the channel condition, and when the change of the channel feature reaches a certain degree, the performance of nonlinear precoding is not as good as the performance of linear precoding instead. At present, a G.fast/xDSL system adopts either linear precoding or nonlinear precoding in the whole operating frequency band, but due to the existence of unstable factors such as clock offset, temperature variety and the like, the channel feature is changed, thereby the performance of precoding being affected, particularly the performance of nonlinear precoding, and the signal transmission performance being affected.

The US 2015/244418 A1 discloses a method employing linear precoding and non-linear precoding for transmitting data between at least two transmitters and a plurality of receivers via a plurality of communication channels over a plurality of subcarrier frequencies, the method comprising the procedures of transmitting by either one of said at least two transmitters, at least two training signals to respective said receivers; receiving by respective said receivers, said at least two training signals; evaluating channel characteristics of at least part of said communication channels, according to said at least two training signals; determining a precoding scheme selection that defines for at least part of said communication channels, over which of said subcarrier frequencies, said data transmitted shall be precoded using either one of linear precoding and non-linear precoding, according to evaluated said channel characteristics; precoding said data according to determined said precoding scheme selection; and transmitting said data according said precoding scheme selection.

In International Telecommunication Union, vol. 4a/15, March 21, 2012, on page 1 to 5, the ITU-T draft discloses various implications of supporting THP, on top of the linear scheme. In addition, the document ends up suggesting a hybrid scheme, integrating the two precoders in a flexible manner.

**SUMMARY**

The present application provides a precoding processing method and device and a storage medium, according to the independent claims, to improve signal transmission performance. Further improvements are provided in the dependent claims.

The present application discloses a precoding processing method, comprising:selecting a precoding processing method for each of sub-frequency bands or each of subcarriers according to a preset policy, wherein the precoding processing method comprises linear precoding and nonlinear precoding;separately performing precoding processing, by using the selected precoding processing method, on a data signal carried on the each of the sub-frequency bands or the each of the subcarriers; and mixing precoded data signals carried on the sub-frequency bands or the subcarriers to obtain a mixed precoded data signal, and sending the mixed precoded data signal;wherein selecting the precoding processing method for the each of the sub-frequency bands or the each of the subcarriers according to the preset policy comprises selecting the precoding processing method for the each of the sub-frequency bands or the each of the subcarriers according to at least one of: network management configuration and a transmission performance parameter of a line in the each of the sub-frequency bands or the each of the subcarriers; characterized in that, wherein selecting the precoding processing method for the each of the sub-frequency bands or the each of subcarriers according to the transmission performance parameter of the line in the each of the sub-frequency bands or the each of the subcarriers comprises:in a system operational stage, for any sub-frequency band or any subcarrier supporting both the linear precoding and the nonlinear precoding, acquiring a first transmission performance parameter of one or more lines in a line vectoring group when a first precoding processing method that is currently used is applied to the any sub-frequency band or the any subcarrier; on condition that the first transmission performance parameter is smaller than a preset adjustment threshold, acquiring a second transmission performance parameter of the one or more lines when a second precoding processing method is applied to the any sub-frequency band or the any subcarrier; and on condition that the second transmission performance parameter is greater than the preset adjustment threshold, and the second transmission performance parameter is greater than the first transmission performance parameter, adjusting the precoding processing method for the any sub-frequency band or the any subcarrier to be the second precoding processing method, wherein the first precoding processing method is the linear precoding, and the second precoding processing method is the nonlinear precoding; or the first precoding processing method is the nonlinear precoding, and the second precoding processing method is the linear precoding. Furthermore the present application discloses a precoding processing device, comprising a memory and a processor, wherein the memory stores a program which, when read and executed by the processor, causes the processor to perform the following operations: selecting a precoding processing method for each of the sub-frequency bands or each of the subcarriers according to a preset policy, wherein the precoding processing method comprises linear precoding and nonlinear precoding;separately performing precoding processing, by using the selected precoding processing method, on a data signal carried on the each of the sub-frequency bands or the each of the subcarriers; and mixing precoded data signals carried on the sub-frequency bands or the subcarriers to obtain a mixed precoded data signal, and sending the mixed precoded data signal;wherein selecting the precoding processing method for the each of the sub-frequency bands or the each of the subcarriers according to the preset policy comprises selecting the precoding processing method for the each of the sub-frequency bands or the each of the subcarriers according to at least one of: network management configuration and a transmission performance parameter of a line in the each of the sub-frequency bands or the each of the subcarriers; characterized in that, wherein selecting the precoding processing method for the each of the sub-frequency bands or the each of the subcarriers according to the transmission performance parameter of the line in the each of the sub-frequency bands or the each of the subcarriers comprises:in a system operational stage, for any sub-frequency band or any subcarrier supporting both the linear precoding and the nonlinear precoding, acquiring a first transmission performance parameter of one or more lines in a line vectoring group when a first precoding processing method that is currently used is applied to the any sub-frequency band or the any subcarrier; on condition that the first transmission performance parameter is smaller than a preset adjustment threshold, acquiring a second transmission performance parameter of the one or more lines when a second precoding processing method is applied to the any sub-frequency band or the any subcarrier; and on condition that the second transmission performance parameter is greater than the preset adjustment threshold, and the second transmission performance parameter is greater than the first transmission performance parameter, adjusting the precoding processing method for the any sub-frequency band or the any subcarrier to be the second precoding processing method, wherein the first precoding processing method is the linear precoding, and the second precoding processing method is the nonlinear precoding; or the first precoding processing method is the nonlinear precoding, and the second precoding processing method is the linear precoding.

In a system initialization stage, for any sub-frequency band or any subcarrier supporting both the linear precoding and the nonlinear precoding, a transmission performance parameter of one more lines in a line vectoring group after nonlinear precoding processing is applied to the sub-frequency band or subcarrier is compared with a transmission performance parameter of the one or more lines after linear precoding processing is applied to the sub-frequency band or subcarrier, and one precoding processing method is selected as the precoding processing method for the any sub-frequency band or the any subcarrier according to a precoding optimization policy.

In an optional embodiment of the present application, the step in which the precoding processing method for the each sub-frequency band or each subcarrier is selected according to the transmission performance parameter of the line in the each sub-frequency band or the each subcarrier includes the steps described below.

In a system operational stage, for any sub-frequency band or any subcarrier supporting both the linear precoding and the nonlinear precoding, the first transmission performance parameter of one or more lines in a line vectoring group when the first precoding processing method that is currently used is applied to the any sub-frequency band or the any subcarrier is acquired; if the first transmission performance parameter is smaller than a preset adjustment threshold, the second transmission performance parameter of the one or more of lines when the second precoding processing method is applied to the any sub-frequency band or the any subcarrier is acquired; and if the second transmission performance parameter is greater than the preset adjustment threshold, and the second transmission performance parameter is greater than the first transmission performance parameter, the precoding processing method for the any sub-frequency band or the any subcarrier is adjusted to be the second precoding processing method. The first precoding processing method is the linear precoding, and the second precoding processing method is the nonlinear precoding; or the first precoding processing method is the nonlinear precoding, and the second precoding processing method is the linear precoding.

In an optional embodiment of the present application, the transmission performance parameter includes at least one of: a net data rate, an attainable net data rate, an attainable data rate, a signal-to-noise ratio of each sub-frequency band or each subcarrier, a maximum value of signal-to-noise ratios in the operating frequency band, a mean value of the signal-to-noise ratios in the operating frequency band, and a signal-to-noise margin in the operating frequency band.

In an optional embodiment of the present application, the method further includes that: an adopted precoding operating mode and a precoding related parameter are determined through the negotiation with a terminal. The adopted precoding operating mode is a single precoding operating mode in which only one of the linear precoding and the nonlinear precoding is adopted, or a hybird precoding operating mode in which both the linear precoding and the nonlinear precoding are adopted.

In an optional embodiment of the present application, when the adopted precoding operating mode is the hybrid precoding operating mode, the precoding related parameter includes at least one of: an operating frequency band supporting only the linear precoding, an operating frequency band supporting only the nonlinear precoding, an operating frequency band in which a precoding method is adaptively adjustable, an operating frequency band in which the linear precoding is initially adopted, and an operating frequency band in which the nonlinear precoding is initially adopted.

An embodiment of the present application provides a precoding processing device. The device includes: a central-office precoding selection module, a precoding processing module and a central-office data-signal mixing module.

The central-office precoding selection module is configured to select a precoding processing method for each sub-frequency band or each subcarrier according to a preset policy, wherein the precoding processing method comprises linear precoding and nonlinear precoding.

The precoding processing module is configured to separately perform precoding processing, by using the selected precoding processing method, on a data signal carried on the each sub-frequency band or the each subcarrier, and output precoded data signals carried on the sub-frequency bands or the subcarriers to the central-office data-signal mixing module.

The central-office data-signal mixing module is configured to mix the precoded data signals to obtain a mixed precoded data signal, and send the mixed precoded data signal.

In an optional embodiment of the present application, the precoding processing module includes a linear-precoding central-office processing module and a nonlinear-precoding central-office processing module.

The linear-precoding central-office processing module is configured to perform linear precoding processing on a data signal carried on a sub-frequency band or a subcarrier in which the linear precoding is selected.

The nonlinear-precoding central-office processing module is configured to perform nonlinear precoding processing on a data signal carried on a sub-frequency band or a subcarrier in which the nonlinear precoding is selected.

In an optional embodiment of the present application, the step in which the central-office precoding selection module selects the precoding processing method for the each sub-frequency band or the each subcarrier according to the preset policy includes that the central-office precoding selection module is configured to select the precoding processing method for the each of the sub-frequency bands or the each of the subcarriers according to at least one of: network management configuration, and a transmission performance parameter of a line in each sub-frequency band or each subcarrier within the operating frequency.

The network management configuration includes at least one of: an operating frequency band, and a precoding processing method supported by each sub-frequency band or each subcarrier within the operating frequency band.

In an optional embodiment of the present application, the step in which the central-office precoding selection module selects the precoding processing method for the each sub-frequency band or the each subcarrier according to the transmission performance parameter of the line in the each sub-frequency band or the each subcarrier includes the steps described below.

In a system initialization stage, for any sub-frequency band or any subcarrier supporting both the linear precoding and the nonlinear precoding, the central-office precoding selection module is configured to compare a transmission performance parameter of one or more lines in a line vectoring group after nonlinear precoding processing is applied to the any sub-frequency band or the any subcarrier with a transmission performance parameter of the one or more lines after linear precoding processing is applied to the any sub-frequency band or the any subcarrier, and select one precoding processing method as the precoding processing method for the any sub-frequency band or the any subcarrier according to a precoding optimization policy.

In an optional embodiment of the present application, the step in which the central office selects the precoding processing method for the each sub-frequency band or the each subcarrier according to the transmission performance parameter of the line in the each sub-frequency band or the each subcarrier includes the steps described below.

a system operating stage, for any sub-frequency band or any subcarrier supporting both the linear precoding and the nonlinear precoding, the central-office precoding selection module is configured to acquire a first transmission performance parameter of one or more lines in a line vectoring group when a first precoding processing method that is currently used is applied to the any sub-frequency band or the any subcarrier, on condition that the first transmission performance parameter is smaller than a preset adjustment threshold, acquire a second transmission performance parameter of the one or more lines when a second precoding processing method is applied to the any sub-frequency band or the any subcarrier, on condition that the second transmission performance parameter is greater than the preset adjustment threshold, and the second transmission performance parameter is greater than the first transmission performance parameter, adjust the precoding processing method for the any sub-frequency band or the any subcarrier to be the second precoding processing method, where the first precoding processing method is the linear precoding, and the second precoding processing method is the nonlinear precoding; or the first precoding processing method is the nonlinear precoding, and the second precoding processing method is the linear precoding.

In an optional embodiment of the present application, the transmission performance parameter includes at least one of: a net data rate, an attainable net data rate, an attainable data rate, a signal-to-noise ratio of the each of the sub-frequency bands or the each of the subcarriers, a maximum value of signal-to-noise ratios in the operating frequency band, a mean value of the signal-to-noise ratios in the operating frequency band, and a signal-to-noise ratio margin in the operating frequency band.

In an optional embodiment of the present application, the device further includes a central-office management entity. The entity is configured to negotiate with a terminal to determine an adopted precoding operating mode and a precoding related parameter, wherein the precoding operating mode is a single precoding operating mode in which only one of the linear precoding and the nonlinear precoding is adopted, or a hybird precoding operating mode in which both the linear precoding and the nonlinear precoding are adopted.

In an optional embodiment of the present application, when the adopted precoding operating mode is the hybird precoding operating mode, the precoding related parameter comprises at least one of: an operating frequency band supporting only the linear precoding, an operating frequency band supporting only the nonlinear precoding, an operating frequency band in which a precoding method is adaptively adjustable, an operating frequency band in which the linear precoding is initially adopted, and an operating frequency band in which the nonlinear precoding is initially adopted.

This embodiment provides a precoding processing device. The device includes a memory and a processor. The memory stores a program which, when read and executed by the processor, causes the processor to perform the operations below.

A precoding processing method for each sub-frequency band or each subcarrier is selected according to a preset policy. The precoding processing method includes linear precoding and nonlinear precoding.

Precoding processing is separately performed, by using the selected precoding processing method, on a data signal carried on the each sub-frequency band or the each subcarrier.

Precoded data signals carried on sub-frequency bands or subcarriers are mixed to obtain a mixed precoded data signal, and the mixed precoded data signal is sent.

In an optional embodiment of the present application, the step in which the precoding processing method for the each sub-frequency band or subcarrier is selected according to the preset policy includes that the precoding processing method for the each sub-frequency band or the each subcarrier is selected according to at least one of: network management configuration, and a transmission performance parameter of a line in each sub-frequency band or each subcarrier within the operating frequency.

The network management configuration includes at least one of: an operating frequency band, and a precoding processing method supported by the each of the sub-frequency bands or the each of the subcarriers within the operating frequency band.

In an optional embodiment of the present application, the step in which the precoding processing method for the each sub-frequency band or the each subcarrier is selected according to the transmission performance parameter of the line for the each sub-frequency band or the each subcarrier includes the steps described below.

In a system initialization stage, for any sub-frequency band or any subcarrier supporting both the linear precoding and the nonlinear precoding, a transmission performance parameter of one or more lines in a line vectoring group after nonlinear precoding processing is applied to the any sub-frequency band or the any subcarrier is compared with a transmission performance parameter of the one or more lines after linear precoding processing is applied to the any sub-frequency band or the any subcarrier, and one precoding processing method is selected as the precoding processing method for the any sub-frequency band or the any subcarrier according to a precoding optimization policy.

In an optional embodiment of the present application, the step in which the precoding processing method for the each sub-frequency band or the each subcarrier is selected according to the transmission performance parameter of the line in the each sub-frequency band or the each subcarrier includes the steps described below.

In a system operational stage, for any sub-frequency band or any subcarrier supporting both the linear precoding and the nonlinear precoding, the first transmission performance parameter of one or more lines in a line vectoring group is acquired when a first precoding processing method that is currently used is applied to the sub-frequency band or subcarrier; if the first transmission performance parameter is smaller than a preset adjustment threshold, the second transmission performance parameter of the one or more lines is acquired when the second precoding processing method is applied to the sub-frequency band or subcarrier; and if the second transmission performance parameter is greater than the preset adjustment threshold, and the second transmission performance parameter is greater than the first transmission performance parameter, the precoding processing method for the sub-frequency band or subcarrier is adjusted to be the second precoding processing method. The first precoding processing method is the linear precoding, and the second precoding processing method is the nonlinear precoding; or the first precoding processing method is the nonlinear precoding, and the second precoding processing method is the linear precoding.

In an optional embodiment of the present application, the transmission performance parameter includes at least one of: a net data rate, an attainable net data rate, an attainable data rate, a signal-to-noise ratio of the each of the sub-frequency bands or the each of the subcarriers, a maximum value of signal-to-noise ratios in the operating frequency band, a mean value of the signal-to-noise ratios in the operating frequency band, and a signal-to-noise ratio margin in the operating frequency band.

In an optional embodiment of the present application, when read and executed by the processor, the program causes the processor to further perform the following operations: an adopted precoding operating mode and a precoding related parameter are determined through negotiation with a terminal. The precoding operating mode is a single precoding operating mode in which only one of the linear precoding and the nonlinear precoding is adopted, or a hybird operating mode in which both the linear precoding and the nonlinear precoding are adopted.

In an optional embodiment of the present application, when the adopted precoding operating mode is the hybird operating mode, the precoding related parameter includes at least one of: an operating frequency band supporting only the linear precoding, an operating frequency band supporting only the nonlinear precoding, an operating frequency band in which a precoding method is adaptively adjustable, an operating frequency band in which the linear precoding is initially adopted, and an operating frequency band in which the nonlinear precoding is initially adopted.

An embodiment of the present application provides a precoding processing method. The method includes the steps described below.

A precoding processing method for each sub-frequency band or each subcarrier is determined according to a precoding selection parameter configured by a central office. The precoding processing method includes linear precoding and nonlinear precoding.

Decoding processing is separately performed, by using a decoding method corresponding to the determined precoding processing method, on a data signal carried on the each sub-frequency band or the each subcarrier.

Decoded data signals are mixed to obtain a mixed decoded data signal, and the mixed decoded data signal is output.

In an optional embodiment of the present application, the method further includes that: an adopted precoding operating mode and a precoding related parameter are determined through the negotiation with a terminal. The adopted precoding operating mode is a single precoding operating mode in which only one of the linear precoding and the nonlinear precoding is adopted, or a hybird precoding operating mode in which both the linear precoding and the nonlinear precoding are adopted.

An embodiment of the present application provides a precoding processing device. The device includes: a terminal precoding selection module, a decoding module and a terminal data-signal mixing module.

The terminal precoding selection module is configured to determine a precoding processing method for each sub-frequency band or each subcarrier according to a precoding selection parameter configured by a central office. The precoding processing method includes linear precoding and nonlinear precoding.

The decoding module is configured to perform decoding separately processing, by using a decoding method corresponding to the determined precoding processing method, on a data signal carried on the each sub-frequency band or the each subcarrier, and output a decoded data signal to the terminal data-signal mixing module.

The terminal data-signal mixing module is configured to mix decoded data signals to obtain a mixed decoded data signal, and output the mixed decoded data signal.

In an optional embodiment of the present application, the decoding module includes a linear-precoding terminal processing module and a nonlinear-precoding terminal module.

The linear-precoding terminal processing module is configured to process, by using a decoding method corresponding to the linear decoding, a data signal carried on a subcarrier that uses linear precoding.

The nonlinear-precoding terminal processing module is configured to process, by using a decoding method corresponding to the nonlinear precoding, a data signal carried on a subcarrier that uses the nonlinear precoding.

In an optional embodiment of the present application, the device further includes: a terminal management entity. The entity is configured to negotiate with the central office to determine an adopted precoding operating mode and a precoding related parameter, wherein the adopted precoding operating mode is a single precoding operating mode in which only one of the linear precoding and the nonlinear precoding is adopted, or a hybird precoding operating mode in which both the linear precoding and the nonlinear precoding are adopted.

An embodiment of the present application provides a precoding processing device. The device includes a memory and a processor. The memory stores a program which, when read and executed by the processor, causes the processor to perform the following operations.

A precoding processing method for each sub-frequency band or subcarrier is determined according to a precoding selection parameter configured by a central office. The precoding processing method includes linear precoding and nonlinear precoding.

Decoding processing is separately performed, by using a decoding method corresponding to the determined precoding processing method, on a data signal carried on the each sub-frequency band or the each subcarrier.

Decoded data signals are mixed to obtain a mixed decoded data signal, and the mixed decoded data signal is output.

In an optional embodiment of the present application, when read and executed by the processor, the program causes the processor to further perform the following operations: an adopted precoding operating mode and a precoding related parameter are determined through negotiation with the central office. The precoding operating mode is a single precoding operating mode in which only one of the linear precoding and the nonlinear precoding is adopted, or a hybird precoding operating mode in which both the linear precoding and the nonlinear precoding are adopted.

An embodiment of the present application provides a storage medium storing computer-executable instructions. When the instructions are executed, the precoding processing method according to any one of the foregoing embodiments is performed.

Compared with the solution in which a single precoding processing method is adopted in the related art, in the solution provided by some embodiments of the present application, linear precoding and nonlinear precoding are adopted mixedly, so that the operating advantage of a linear precoding method or a nonlinear precoding method is fully utilized in a corresponding frequency band or under a corresponding channel feature or condition, the mixing of crosstalk between wire pairs is canceled, and the overall performance of a system is improved. In some embodiments of the present application, the problem in coexistence and interworking between DSL/G.fast terminals supporting different precoding methods and a central office is solved.

Other features and advantages of the present application will be elaborated hereinafter in the description and, moreover, partially become apparent from the description, or will be understood through implementation of the present application. The object and other advantages of the present application may be achieved and obtained through structures set forth in the description, claims and drawings.

## BRIEF DESCRIPTION OF DRAWINGS

The drawings are provided for a further understanding of the technical solution of the present application, and constitute a part of the description. The drawings and the embodiments of the present application are used to explain the technical solution of the present application, and not intended to limit the technical solution of the present application.

FIG. 1 is an architecture diagram illustrating processing by a hybird precoding central-office according to an embodiment of the present application;

FIG. 2 is an architecture diagram illustrating processing by a hybird precoding terminal according to an embodiment of the present application;

FIG. 3 is a frame diagram illustrating data processing through hybird precoding according to an embodiment of the present application;

FIG. 4 is a flowchart of negotiation between a central office supporting hybird precoding and a terminal supporting only linear precoding according to an embodiment of the present application; and

FIG. 5 is a flowchart of negotiation between a central office and a terminal both supporting hybird precoding according to an embodiment of the present application.

## DETAILED DESCRIPTION

The object, technical solution and advantages of the present application will be clearer from a detailed description of embodiments of the present application in conjunction with the drawings. It is to be noted that if not in collision, the embodiments and features therein in the present application may be combined with each other.

The solution provided by the embodiments of the present application may be used for but not limited to a DSL/G.fast system.

Embodiment one

This embodiment provides a precoding processing method. The method includes the steps described below.

A precoding (or vectoring) processing method for each sub-frequency band or each subcarrier is selected according to a preset policy. The precoding processing method includes linear precoding and nonlinear precoding.

Precoding processing is separately performed, by using the selected precoding processing method, on a data signal carried on the each sub-frequency band or the each subcarrier.

Precoded data signals carried on sub-frequency bands or subcarriers are mixed to obtain a mixed precoded data signal, and the mixed precoded data signal is sent.

In an optional embodiment of the present application, the step in which the precoding processing method for the each sub-frequency band or the each subcarrier is selected according to the preset policy includes that the precoding processing method for the each sub-frequency band or the each subcarrier is selected according to at least one of network management configuration, and a transmission performance parameter of a line in each sub-frequency band or each subcarrier within the operating frequency band.

The network management configuration includes at least one of: an operating frequency band, and a precoding processing method supported by the each sub-frequency band or the each subcarrier within the operating frequency band.

The transmission performance parameter of the line in the each sub-frequency band or the each subcarrier is the transmission performance parameter after precoding processing is performed in the each sub-frequency band or the eahc subcarrier using a different precoding processing method.

Selection according to the network management configuration refers to the action of determining the precoding processing method for the each sub-frequency band or subcarrier according to the network management configuration. For example, the network management configuration indicates that only the linear precoding can be used in some frequency bands, and only the nonlinear precoding can be used in some other frequency bands. In this case, the precoding processing method to be adopted can be directly determined according to the network management configuration. In another embodiment, some frequency bands may support both the linear precoding and the nonlinear precoding. In this case, the precoding processing method to be adopted can be determined further according to the transmission performance parameter of the line in the each sub-frequency band and the each subcarrier. Of course, in some cases, if a central office supports both the linear precoding and the nonlinear precoding by default, then the precoding processing method to be adopted can be directly determined according to the transmission performance parameter of the line in the each sub-frequency band and the each subcarrier.

In an optional embodiment of the present application, the step in which the precoding processing method for the each sub-frequency band or the each subcarrier is selected according to the transmission performance parameter of the line in the each sub-frequency band or the each subcarrier includes the steps described below.

In a system initialization stage, for any sub-frequency band or any subcarrier supporting both the linear precoding and the nonlinear precoding, a transmission performance parameter of one or more lines in a line vectoring group after nonlinear precoding processing is applied to the any sub-frequency band or the any subcarrier is compared with a transmission performance parameter of the one or more lines after linear precoding processing is applied to the any sub-frequency band or the any subcarrier, and one precoding processing method is selected as the precoding processing method for the any sub-frequency band or the any subcarrier according to a precoding optimization policy.

The precoding optimization policy may be transmission performance optimization or other policies.

In an optional embodiment of the present application, the step in which the precoding processing method for the each sub-frequency band or the each subcarrier is selected according to the transmission performance parameter of the line in the each sub-frequency band or the each subcarrier includes the steps described below.

in a system operational stage, for any sub-frequency band or any subcarrier supporting both the linear precoding and the nonlinear precoding, the first transmission performance parameter of one or more lines in a line vectoring group is acquired when the first precoding processing method that is currently used is applied to the any sub-frequency band or the any subcarrier; if the first transmission performance parameter is smaller than a preset adjustment threshold, the second transmission performance parameter of the one or more lines is acquired when the second precoding processing method is applied to the any sub-frequency band or the any subcarrier; and if the second transmission performance parameter is greater than the preset adjustment threshold, and the second transmission performance parameter is greater than the first transmission performance parameter, the precoding processing method for the any sub-frequency band or the any subcarrier is adjusted to be the second precoding processing method. The first precoding processing method is the linear precoding, and the second precoding processing method is the nonlinear precoding; or the first precoding processing method is the nonlinear precoding, and the second precoding processing method is the linear precoding.

In an optional embodiment of the present application, the transmission performance parameter includes at least one of: a net data rate (NDR), an attainable net data rate (ATTNDR), an attainable data rate (ATTDR), a signal-to-noise ratio per subcarrier (SNRps), a signal-to-noise ratio maximum value in the operating frequency band (SNRmax), a signal-to-noise ratio mean value in the operating frequency band (SNRmean), and a signal-to-noise ratio margin (SNRM). The NDR is the data transfer unit payload rate minus the data rate of an embedded operation management channel (EOC). The attainable net data rate is the maximum NDR attainable for the current line. The attainable data rate refers to the maximum data transfer unit payload rate attainable for the current line. The SNR margin indicates the ability of a network to work without errors under a noise surge. The SNR margin is the difference between two SNR values. One of the two SNR values is the signal-to-noise ratio of the current network, and the other is the signal-to-noise ratio with which a reliable connection can just be maintained at the current speed.

In an optional embodiment of the present application, the method further includes: an adopted precoding operating mode and a precoding related parameter are determined through negotiation with a terminal. The adopted precoding operating mode is a single precoding operating mode in which only one of the linear precoding and the nonlinear precoding is adopted, or a hybrid precoding operating mode in which both the linear precoding and the nonlinear precoding are adopted.

When the adopted precoding operating mode is the hybird precoding operating mode, the precoding related parameter includes at least one of: an operating frequency band supporting only the linear precoding, an operating frequency band supporting only the nonlinear precoding, an operating frequency band in which a precoding method is adaptively adjustable, an operating frequency band in which the linear precoding is initially adopted, and an operating frequency band in which the nonlinear precoding id initially adopted.

The central office has the network management configuration parameter: for example, an operating profile. The profile includes at least one of: an operating frequency band, and a precoding type (only linear precoding is supported, only nonlinear precoding is supported, or both linear precoding and nonlinear precoding are supported) supported by each sub-frequency band or each subcarrier within the operating frequency band.

In the system initialization stage, it is determined whether to adopt a single precoding method or a hybird precoding method through negotiation between the central office and the terminal. The single precoding method refers to that linear precoding or nonlinear precoding is uniformly adopted in all sub-frequency bands (or subcarriers). The hybird precoding method refers to that both the linear precoding and the nonlinear precoding are supported by all or part of the sub-frequency bands or subcarriers within the operating frequency band.

If one of the central office and the terminal supports only specific linear (or nonlinear) precoding but not hybird precoding, the hybird precoding method will not be adopted; a specific precoding method supported by both the central office and the terminal will be selected according to the profile of the central office and the profile of the terminal; and the central office or the terminal supporting hybird precoding will adopt the specific precoding method supported by both the central office and the terminal.

If both the central office and the terminal support the hybird precoding method, and the profile of the central office and the profile of the terminal are matched, the system will adopt the hybird precoding method. The central office may acquire the precoding related parameter from a management information base (MIB) of a network management entity, and configure the parameter for the terminal, or negotiate with the terminal to determine the precoding related parameter.

The precoding related parameter includes at least one of: an operating frequency band supporting only linear precoding, an operating frequency band supporting only nonlinear precoding, an operating frequency band in which the precoding method is adaptively adjustable, an operating frequency band in which linear precoding is initially adopted, an operating frequency band in which nonlinear precoding is initially adopted, and other linear-precoding operating parameters and nonlinear-precoding operating parameters.

Of course, the foregoing negotiation manner is just an example, and in other embodiments of the present application, other negotiation manners may be adopted. In addition, the central office and the terminal may also be configured in advance and do not negotiate with each other. For example, both the central office and the terminal support the linear precoding and the nonlinear precoding in each frequency band. In this case, the central office may directly determine the precoding processing method, and then notify the terminal. Alternatively, both the central office and the terminal are configured to support the linear precoding or the nonlinear precoding in the frequency band where the current signal to be transmitted is located. In this case, the central office may also directly determine the precoding processing method without performing negotiation.

How to select the precoding processing method according to a preset policy will be described in conjunction with a specific example below. It should be noted that the selection method below is just an example, and other policies may be set as needed. In the system initialization stage or the system operational stage, through the evaluation of the transmission performance of the line in the case of linear precoding in a given frequency band and in the case of nonlinear precoding in the given frequency band, a suitable precoding method (linear precoding or nonlinear precoding) is determined according to a precoding optimization policy, for example, an optimal transmission criterion or a vectoring policy.

(1) In a channel initialization stage, for the operating frequency band in which the precoding method is adaptively adjustable, one of the manners described below may be adopted.

A1: According to a vectoring policy, a corresponding parameter (which may be the signal-to-noise ratio obtained by one line in subcarrier k, or the SNR mean value, SNR maximum value or SNR minimum value of a plurality of lines in the current line vectoring group in subcarrier k) is selected for measurement. Assuming that for the selected parameter, the signal-to-noise ratio obtained through linear precoding is $SNR_x^{LP}$ , and the signal-to-noise ratio obtained through nonlinear precoding is $SNR_x^{NLP}$ , if $SNR_x^{NLP} > SNR_x^{LP}$ , the nonlinear precoding method is adopted; otherwise, the linear precoding method is adopted. A line vectoring group is all lines in a bundle of line pairs, generally a plurality of lines interfering with each other.

A2: According to a vectoring policy, a corresponding parameter (note: the corresponding parameter may be the attainable data rate of one line, for example, one operator-specified line, or the attainable data rate mean value, attainable data rate maximum value or attainable data rate minimum value of a plurality of lines in the current vectoring group) is selected for measurement. Assuming that for the selected parameter, the attainable data rate obtained through linear precoding is , and the attainable data rate obtained through nonlinear precoding is , if , the nonlinear precoding method is adopted; otherwise, the linear precoding method is adopted.

A3: According to a vectoring policy, a corresponding parameter (note: the corresponding parameter may be the net data rate of one line, for example, one operator-specified line, or the net data rate mean value, net data rate maximum value or net data rate minimum value of a plurality of lines in the current vectoring group) is selected for measurement. Assuming that for the selected parameter, the net data rate obtained through linear precoding is $NDR_x^{LP}$ , and the net data rate obtained through nonlinear precoding is $NDR_x^{NLP}$ , if $NDR_x^{NLP} > NDR_x^{LP}$ , the nonlinear precoding method is adopted; otherwise, the linear precoding method is adopted.

A4: According to a vectoring policy, a corresponding parameter (note: the corresponding parameter may be the attainable net data rate of one line, for example, one operator-specified line, or the attainable net data rate mean value, attainable net data rate maximum value or attainable net data rate minimum value of a plurality of lines in the current vectoring group) is selected for measurement. Assuming that for the selected parameter, the attainable net data rate obtained through linear precoding is $ATTNDR_x^{LP}$ , and the attainable net data rate obtained through nonlinear precoding is $ATTNDR_x^{NLP}$ , if $ATTNDR_x^{NLP} > ATTNDR_x^{LP}$ , the nonlinear precoding method is adopted; otherwise, the linear precoding method is adopted.

A5: According to a vectoring policy, a corresponding parameter (note: the corresponding parameter may be the SNR margin of one line, for example, one operator-specified line, or the SNR margin mean value, SNR margin maximum value or SNR margin minimum value of a plurality of lines in the current vectoring group) is selected for measurement. Assuming that for the selected parameter, the SNR margin obtained through linear precoding is $SNRM_x^{LP}$ , and the SNR margin obtained through nonlinear precoding is x , if $SNRM_x^{NLP} > SNRM_x^{LP}$ , the nonlinear precoding method is adopted; otherwise, the linear precoding method is adopted.

(2) In a system operational process, for the operating frequency band in which the precoding method is adaptively adjustable, one of the manners described below may be adopted.

B1: A signal-to-noise ratio threshold $SNR_{threshhold}$ that triggers the precoding adjustment can be set. If linear precoding is initially adopted, the signal-to-noise ratio of one line (for example, one line whose transmission quality needs to be guaranteed) in subcarrier k, or the SNR mean value, SNR maximum value or SNR minimum value of a plurality of lines in the current vectoring group in subcarrier k is selected and set to $SNR_x^{LP}$ . When $SNR_x^{LP} < SNR_{threshhold}$ , the evaluation for performing the nonlinear precoding is started. If $SNR_x^{NLP} > SNR_x^{LP}$ and $SNR_x^{NLP} > SNR_{threthhold}$ , the system is adjusted to adopt a nonlinear precoding method; otherwise, no adjustment is made. If nonlinear precoding is initially adopted, the signal-to-noise ratio of line m in subcarrier k, or the SNR mean value, SNR maximum value or SNR minimum value of the plurality of lines in the current vectoring group in subcarrier k is selected and set to $SNR_x^{NLP}$ according to a vectoring policy. When $SNR_x^{NLP} < SNR_{threshhold}$, the evaluation for performing the linear precoding is started. If $SNR_x^{LP} > SNR_x^{NLP}$ and $SNR_x^{LP} > SNR_{threthhold}$, the system is adjusted to adopt the linear precoding method; otherwise, no adjustment is made.

B2: An attainable data rate threshold $ATTDR_{threshhold}$ that triggers the precoding adjustment can be set. In the system operational process, if linear precoding is initially adopted, the attainable data rate of line m, or the attainable data rate mean value, attainable data rate maximum value or attainable data rate minimum value of a plurality of lines in the current vectoring group is selected and set to $ATTDR_x^{LP}$ according to a vectoring policy. When $ATTDR_x^{LP} < ATTDR_{threshhold}$, the evaluation for performing the nonlinear precoding is started. If $ATTDR_x^{NLP} > ATTDR_x^{LP}$ and $ATTDR_x^{NLP} > ATTDR_{threthhold}$, the system is adjusted to be the nonlinear precoding method, otherwise, no adjustment is made. If the nonlinear precoding is initially adopted, the attainable data rate obtained by line m, or the attainable data rate mean value, attainable data rate maximum value or attainable data rate minimum value of the plurality of lines in the current vectoring group is selected and set to $ATTDR_x^{NLP}$ according to the vectoring policy. When $ATTDR_x^{NLP} < ATTDR_{threshhold}$, the evaluation for performing the linear precoding is started. If $ATTDR_x^{LP} > ATTDR_x^{NLP}$ and $ATTDR_x^{LP} > ATTDR_{threthhold}$, the system is adjusted to be the linear precoding method; otherwise, no adjustment is made.

B3: A net data rate threshold $NDR_{threshhold}$ that triggers the precoding adjustment can be set. In the system operational process, if linear precoding is initially adopted, the net data rate of line m, or the net data rate mean value, net data rate maximum value or net data rate minimum value of a plurality of lines in the current vectoring group is selected and set to $NDR_x^{LP}$ according to a vectoring policy. When $NDR_x^{LP} < NDR_{threshhold}$, the evaluation for performing nonlinear precoding is started. If $NDR_x^{NLP} > NDR_x^{LP}$ and $NDR_x^{NLP} > NDR_{threthhold}$, the system is adjusted to be the nonlinear precoding method; otherwise, no adjustment is made. If nonlinear precoding is initially adopted, the net data rate of line m, or the net data rate mean value, net data rate maximum value or net data rate minimum value of the plurality of lines in the current vectoring group is selected and set to $NDR_x^{NLP}$ according to the vectoring policy. When $NDR_x^{NLP} < NDR_{threshhold}$, the evaluation for performing the linear precoding is started. If $NDR_x^{LP} > NDR_x^{NLP}$ and $NDR_x^{LP} > NDR_{threthhold}$, the system is adjusted to be the linear precoding method; otherwise, no adjustment is made.

B4: An attainable net data rate threshold $ATTNDR_{threshhold}$ that triggers the precoding adjustment can be set. In the system operational process, if linear precoding is initially adopted, the attainable net data rate of line m, or the attainable net data rate mean value, attainable net data rate maximum value or attainable net data rate minimum value of a plurality of lines in the current vectoring group is selected and set to $ATTNDR_x^{LP}$ according to a vectoring policy. When $ATTNDR_x^{LP} < ATTNDR_{threshhold}$ , the evaluation for performing the nonlinear precoding is started. If $ATTNDR_x^{NLP} > ATTNDR_x^{LP}$ and $ATTNDR_x^{NLP} > ATTNDR_{threthhold}$ , the system is adjusted to be the nonlinear precoding method; otherwise, no adjustment is made. If nonlinear precoding is initially adopted, the attainable net data rate of line m, or the attainable net data rate mean value, attainable net data rate maximum value or attainable net data rate minimum value of the plurality of lines in the current vectoring group is selected and set to $ATTNDR_x^{NLP}$ according to the vectoring policy. When $ATTNDR_x^{NLP} < ATTNDR_{threshhold}$ , the evaluation for performing the linear precoding is started. If $ATTNDR_x^{LP} > ATTNDR_x^{NLP}$ and $ATTNDR_x^{LP} > ATTNDR_{threthhold}$ , the system is adjusted to be the linear precoding method; otherwise, no adjustment is made.

B5: A SNR margin threshold $SNRM_{threshhold}$ that triggers the precoding adjustment can be set. In the system operational process, if linear precoding is initially adopted, the SNR margin of line m, or the SNR margin mean value, SNR margin maximum value or SNR margin minimum value of a plurality of lines in the current vectoring group is selected and set to $SNRM_x^{LP}$ according to a vectoring policy. When $SNRM_x^{LP} < SNRM_{threshhold}$ , the evaluation for performing the nonlinear precoding is started. If $SNRM_x^{NLP} > SNRM_x^{LP}$ and $SNRM_x^{NLP} > SNRM_{threthhold}$, the system is adjusted to be the nonlinear precoding method; otherwise, no adjustment is made. If nonlinear precoding is initially adopted, the SNR margin of line m, or the SNR margin mean value, SNR margin maximum value or SNR margin minimum value of the plurality of lines in the current vectoring group is selected and set to $SNRM_x^{NLP}$ according to the vectoring policy. When $SNRM_x^{NLP} < SNRM_{threshhold}$ ,the evaluation for performing the linear precoding is started. If $SNRM_x^{LP} > SNRM_x^{NLP}$ and $SNRM_x^{LP} > SNRM_{threthhold}$ , the system is adjusted to be the linear precoding method; otherwise, no adjustment is made.

B6: An adjustment is performed in conjunction with the , the , the , the SNR and the SNRM. For example, as long as one of the and the SNR is smaller than a respective preset threshold, the adjustment of the precoding processing method is started. For the specific adjustment method, see related description in the foregoing manners B1-B5.

Embodiment two

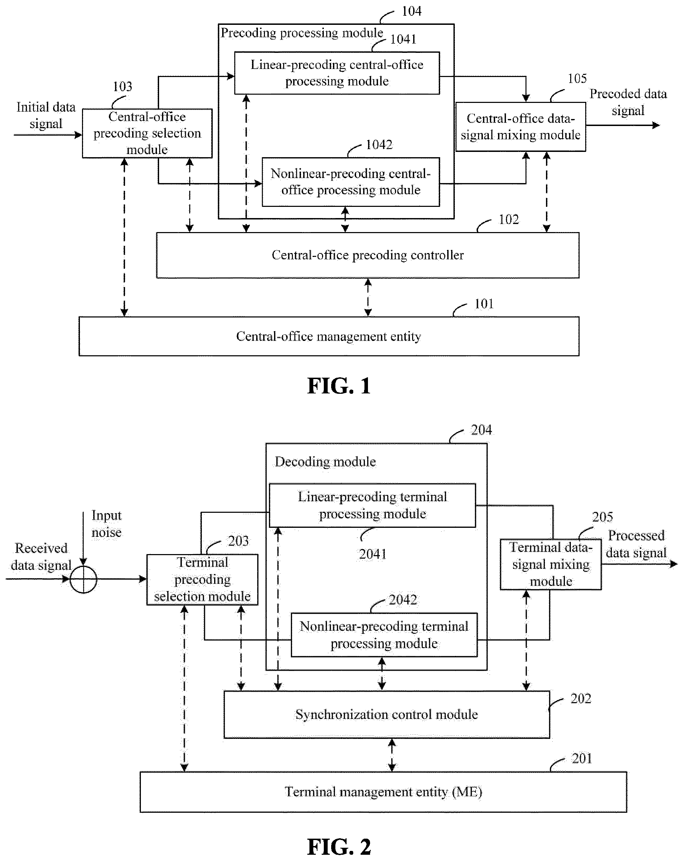

As shown in FIG. 1, an embodiment of the present application provides a precoding processing device, which is applied to a central office. The device includes a central-office precoding selection module 103, a precoding processing module 104 and a central-office data-signal mixing module 105.

The central-office precoding selection module 103 is configured to select a precoding processing method for each sub-frequency band or each subcarrier according to a preset policy. The precoding processing method includes linear precoding and nonlinear precoding.

The precoding processing module 104 is configured to separately perform precoding processing, by using the precoding processing method selected by the central-office precoding selection module 103, on a data signal carried on the each sub-frequency band or the each subcarrier, and output a precoded data signal to the central-office data-signal mixing module 105.

The central-office data-signal mixing module is configured to mix precoded data signals, and send a mixed precoded data signal.

In another embodiment, the precoding processing module 104 includes a linear-precoding central-office processing module 1041 and a nonlinear-precoding central-office processing module 1042.

The linear-precoding central-office processing module 1041 is configured to perform linear precoding processing on a data signal carried on a sub-frequency band or subcarrier in which linear precoding is selected, and output a precoded signal to the central-office data-signal mixing module 105.

The nonlinear-precoding central-office processing module 1042 is configured to perform nonlinear precoding processing on a data signal carried on a sub-frequency band or subcarrier in which nonlinear precoding is selected, and output a precoded signal to the central-office data-signal mixing module 105.

In another embodiment of the present application, the device further includes a management entity 101 and a precoding controller 102.

The management entity 101 is configured to negotiate with a terminal to determine a precoding operating mode to be adopted and a precoding related parameter. The precoding operating mode is a single precoding operating mode in which only one of linear precoding and nonlinear precoding is adopted, or a hybird precoding operating mode in which both linear precoding and nonlinear precoding are adopted.

The precoding controller 102 is configured to configure the related parameters of the central-office precoding selection module 103, the precoding processing module 104 and the central-office data-signal mixing module 105, uniformly perform precoding-processing control on these modules, and meanwhile guarantee synchronization of data signals before and after precoding processing within the operating frequency.

The device supporting hybird precoding provided in this embodiment is interoperable with a terminal supporting nonlinear precoding, a terminal supporting linear precoding, or a terminal supporting hybird precoding. The central office supporting hybird precoding may adopt suitable precoding processing methods (the linear or nonlinear precoding method) in different operating frequency bands according to the preset policy on the basis of the type of the terminal connected to each wire pair in one bundle of copper wires. For a terminal supporting hybird precoding, a specific precoding processing method to be adopted can be determined through negotiation according to the precoding type of the central office (a central office supporting nonlinear precoding, a central office supporting linear precoding, or a central office supporting hybird precoding).

Embodiment three

This embodiment provides a precoding processing method, which can be applied to a terminal. The method includes the steps described below.

A precoding processing method for each sub-frequency band or subcarrier is determined according to a precoding selection parameter configured by a central office. The precoding processing method includes linear precoding and nonlinear precoding.

Decoding processing is separately performed, by using a decoding method corresponding to the determined precoding processing method, on a data signal carried on the each sub-frequency band or subcarrier.

Decoded data signals are mixed, and a mixed decoded data signal is output.

The precoding selection parameter is sent to the terminal by the central office after the central office determines the precoding processing method for the each sub-frequency or subcarrier, so that the terminal is notified of the precoding processing method for the each sub-frequency or the each subcarrier.

In an optional embodiment of the present application, the method further includes that a precoding operating mode to be adopted and a precoding related parameter are determined through negotiation with the central office. The precoding operating mode is a single precoding operating mode in which only one of linear precoding and nonlinear precoding is adopted, or a hybird precoding operating mode in which both linear precoding and nonlinear precoding are adopted. The precoding related parameter includes an operating frequency band supported by both the central office and the terminal, and a precoding processing method (for example, only linear precoding is supported, only nonlinear precoding is supported, or both linear precoding and nonlinear precoding are supported) supported by each sub-frequency band or each subcarrier within the operating frequency band.

Embodiment four

As shown in FIG. 2, this embodiment provides a precoding processing device, which can be applied to a terminal. The device includes a terminal precoding selection module 203, a precoding module 204 and a terminal data-signal mixing module 205.

The terminal precoding selection module 203 is configured to determine a precoding processing method for each subcarrier according to a precoding selection parameter configured by a central office. The precoding processing method includes linear precoding and nonlinear precoding.

The decoding module 204 is configured to separately perform decoding processing, by using a decoding method corresponding to the determined precoding processing method, on a data signal carried on the each subcarrier, and output a decoded data signal to the terminal data-signal mixing module 205.

The terminal data-signal mixing module 205 is configured to mix decoded data signals, and output a mixed decoded data signal.

In another embodiment, the decoding module 204 includes a linear-precoding terminal processing module 2041 and a nonlinear-precoding terminal processing module 2042.

The linear-precoding terminal processing module 2041 is configured process, by using a decoding method corresponding to linear precoding, a data signal carried on a subcarrier that uses linear precoding.

The nonlinear-precoding terminal processing module 2042 is configured to process, by using a decoding method corresponding to nonlinear decoding, a data signal carried on a subcarrier that uses nonlinear precoding.

In another embodiment of the present application, the device further includes a terminal management entity 201 and a synchronization control module 202.

The terminal management entity 201 is configured to negotiate with the central office to determine a precoding operating mode to be adopted and a precoding related parameter. The precoding operating mode is a single precoding operating mode in which only one of linear precoding and nonlinear precoding is adopted, or a hybird precoding operating mode in which both linear precoding and nonlinear precoding are adopted.

The synchronization control module 202 is configured to perform synchronization control on the terminal precoding selection module 203, the decoding module 204 and the terminal data-signal mixing module 205, guaranteeing synchronization of data signals within the operating frequency band before and after precoding processing.

Embodiment five

A central-office precoding selection module 103 can perform performance analysis on a line in a line initialization stage or a line operational stage, that is, use a linear precoding method and a nonlinear precoding method to transmit data in a specific subcarrier and compare their respective transmission performance parameters obtained, such as SNRs or attainable data rates, and then make a decision according to the transmission performance parameters obtained and select a precoding processing method for each sub-frequency band or subcarrier. The decision is made by the central-office precoding selection module 103. The specific transmission performance parameter may be acquired by other modules and then sent to the central-office precoding selection module 103, or may be acquired by the central-office precoding selection module 103.

After a data signal is input, the central-office precoding selection module 103 de-multiplexes the data signal and makes the de-multiplexed data signal carried on the each subcarrier, and inputs a data signal on the each subcarrier to a corresponding precoding processing module for processing. Processed data is mixed by a central-office data-signal mixing module 105. After receiving a signal, a terminal firstly de-multiplexes the signal, and inputs a signal on the each subcarrier to a corresponding decoding module for processing. Processed signals are multiplexed so that a final output signal is obtained.

A de-multiplexer for de-multiplexing is deployed in the central-office precoding selection module 103, and a multiplexer for multiplexing is deployed in the central-office data-signal mixing module 105. The de-multiplexer may also be deployed in the terminal data-signal mixing module, and the multiplexer may also be deployed in the terminal precoding selection module.

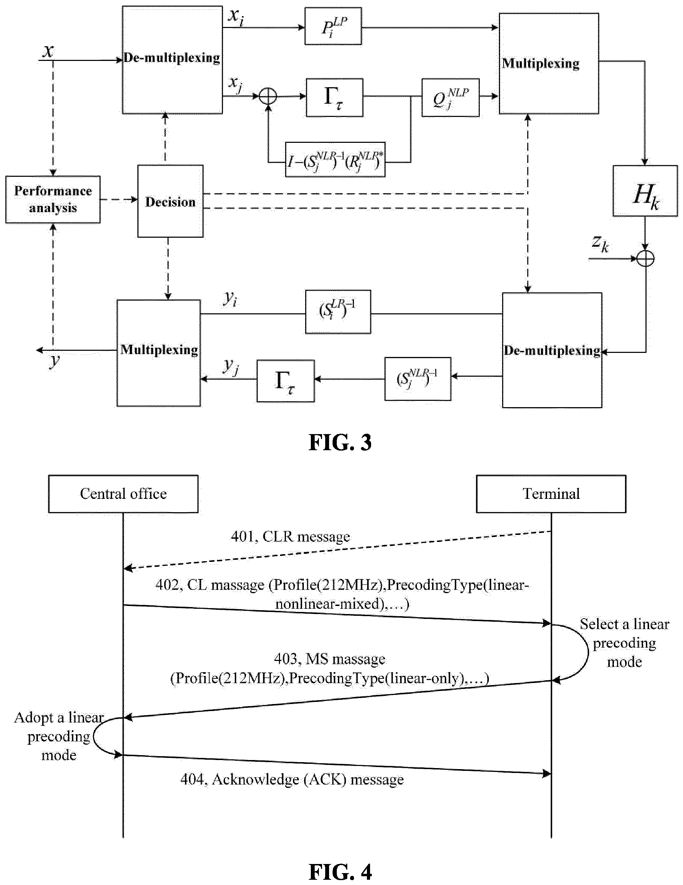

FIG. 3 shows a typical linear-precoding processing method and a typical nonlinear-precoding processing method.

As shown in FIG. 3, supposing that $x$ denotes the signal to be transmitted, N denotes the number of copper wires pairs in a bundle of copper wires, where a pair is also referred to as a line, and M denotes the number of subcarriers transmitted by each wire pair in the bundle, then:

$x = [x_1, x_2, ..., x_k, ..., x_M]$, where $x_k = [x_k^1, x_k^2, ..., x_k^N]$, and k is a corresponding subcarrier.

Suppose that the set of subcarriers in which the linear precoding method is adopted is $C_{LP}$, that is:

$C_{LP}$ = {$i$|$i$ is a subcarrier in which linear precoding is adopted}.

$x_i$ refers to signals to be transmitted by N line pairs corresponding to subcarrier i in which linear precoding is adopted.

$y_i$ is obtained after the signals are correspondingly transmitted to the terminal and decoded.

The set of subcarriers in which the nonlinear precoding method is adopted is $C_{NLP}$, that is:

$C_{NLP}$ = {j|j is a subcarrier in which nonlinear precoding is adopted}.

$x_j$ refers to signals to be transmitted by N line pairs corresponding to subcarrier j in which nonlinear precoding is adopted. $y_j$ is obtained after the signals are correspondingly transmitted to the terminal and decoded.

The elements in set $C_{LP}$ and set $C_{NLP}$ are determined by the central-office precoding selection module 103.
The relationship between the data signal sent by the central office in subcarrier k and the data signal received by the terminal in subcarrier k is shown as the formula below.

$$
y_k = \begin{cases}
\left(S_k^{LP}\right)^{-1}\left(H_k P_k^{LP} x_k + z_k\right) & k = i \text{ and } i \in C_{LP} \text{ and } H_i = S_i^{LP}\left(P_i^{LP}\right)^{-1} \\
\Gamma\left(\left(S_j^{NLP}\right)^{-1}\left(H_k Q_j^{NLP}\Gamma_\tau\left(\left(R^*\right)^{-1} S_j^{NLP} x_k\right) + z_k\right)\right) & k = j \text{ and } j \in C_{NLP} \text{ and } H_j = \left(Q_j^{NLP} R_j^{NLP}\right)^*
\end{cases}
$$

$H_k$ denotes a channel matrix, $S_i^{LP}$ denotes the power spectral density (PSD) adjustment quantization factor of linear precoding in subcarrier I, $S_j^{NLP}$ denotes the PSD adjustment quantization factor of nonlinear precoding in subcarrier j, $Q_j^{NLP}$ denotes a unitary matrix, $R_j^{NLP}$ denotes an upper triangular matrix, and $\Gamma_\tau()$ denotes a modulo operation based on $\tau$ for an element of a certain vector.

It should be noted that the hybird precoding provided by the embodiments of the present application is not limited to a specific linear precoding method and a specific nonlinear precoding method, and precoding methods are adopted in a coordinated manner according to a decision target and a vectoring policy so that a suitable precoding method is adopted in a specific operating frequency (or subcarrier), and nonlinear precoding and linear precoding of data signals are performed in a coordinated manner.

Embodiment six

This embodiment provides an implementation process of negotiation between a central office and a terminal in a system initialization stage. The central office and the terminal negotiate to determine which precoding processing method is to be adopted.
If one of the central office and the terminal supports only specific linear (or nonlinear) precoding but not hybird precoding, then the hybird precoding method will not be adopted, a specific precoding method supported by both the central office and the terminal will be selected according to a profile supported by both the central office and the terminal, and the central office or the terminal supporting hybird precoding will adopt the specific precoding method supported by both the central office and the terminal.
As shown in FIG. 4, in this embodiment, the central office supports the 212 MHz profile where hybird precoding is adopted, the terminal supports the 212 MHz profile where linear precoding is adopted, and the step in which the central office and the terminal negotiate to adopt linear precoding includes the steps described below.
In step 401, the central office receives a capability list request (CLR) message sent by the terminal.
In step 402, the central office transmits, through a capability list (CL) message, a precoding type capability, an operating mode and a parameter supported by the central office to the terminal.
In step 403, after receiving the CL message, the terminal sets PrecodingType in a mode selection (MS) message to linear-only, indicating that only linear precoding is supported, and sends the MS message to the central office.
In step 404, after receiving the MS message, the central office sends an acknowledgement (ACK) message to the terminal if approving the linear precoding mode; and after receiving the acknowledgement message, the terminal confirms that the system will adopt the linear precoding operating mode, and ends the negotiation process.
Of course, it is feasible to skip step 401 and perform step 402 directly, that is, the central office directly transmits, through the CL message, the precoding type capability, the operating mode and the parameter supported by the central office to the terminal.

Embodiment seven

If both a central office and a terminal of a system support a hybird precoding method, and a profile of the central office and a profile of the terminal are matched, the system will adopt the hybird precoding method. The central office may acquire a precoding related parameter from a management information base (MIB) of a network management entity, and configure the parameter for the terminal, or negotiate with the terminal to determine the precoding related parameter. The precoding related parameter includes at least one of: an operating frequency band supporting only linear precoding is supported, an operating frequency band supporting only nonlinear precoding is supported, an operating frequency band in which a precoding method is adaptively adjustable, a operating frequency band in which linear precoding is initially adopted, an operating frequency band in which nonlinear precoding is initially adopted, and other linear-precoding operating parameters and nonlinear-precoding operating parameters.

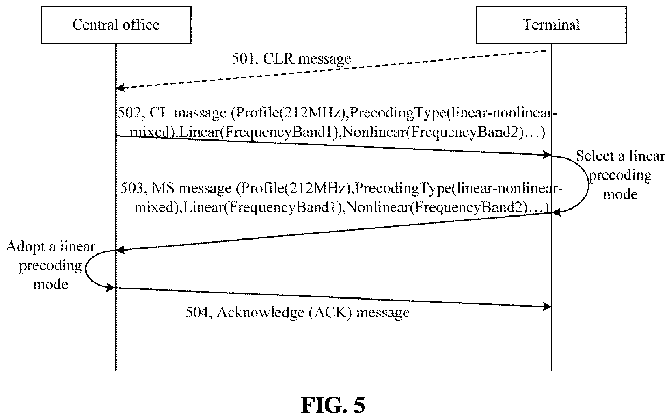

This embodiment provides a negotiation method between the central office and the terminal. In this embodiment, both the central office and the terminal support the 212 MHz profile where hybird precoding is adopted (linear precoding is adopted in 2-106 MHz frequency band, and nonlinear precoding is adopted in 106-212 MHz frequency band), and, as shown in FIG. 5, the step in which the precoding related parameter is negotiated and determined by the central office and the terminal includes the steps described below.

In step 501, the central office receives a CLR message sent by the terminal.

In step 502, the central office transmits, through a CL message, a precoding type capability, an operating mode and a parameter supported by the central office to the terminal.

In step 503, after receiving the CL message, the terminal sets PrecodingType in a mode selection (MS) message to hybrid, indicating that hybird precoding is supported, and meanwhile sets precoding related parameters (the linear-precoding frequency band: 2-106 MHz, and the nonlinear-precoding frequency band: 106-212 MHz), and sends the MS message to the central office.

In step 504, after receiving the MS message, the central office sends an acknowledgement (ACK) message to the terminal if approving the hybird precoding operating mode and the related parameter; and after receiving the acknowledgement message, the terminal confirms that the system will adopt the hybird precoding operating mode, determines precoding related parameters (linear precoding is adopted in 2-106 MHz frequency band, and nonlinear precoding is adopted in 106-212 MHz frequency band), and ends the negotiation process.

It is also feasible to skip step 501 and perform step 502 directly, that is, the central office directly transmits, through the CL message, the precoding type capability, the operating mode and the parameter supported by the central office to the terminal.

Embodiment eight

This embodiment provides a precoding processing device. The device includes a memory and a processor. The memory stores a program which, when read and executed by the processor, causes the processor to perform the operations below.

A precoding processing method for each sub-frequency band or subcarrier is selected according to a preset policy. The precoding processing method includes linear precoding and nonlinear precoding.

Precoding processing is performed, separately by using the selected precoding processing method, on a data signal carried on the each sub-frequency band or subcarrier.

Precoded data signals carried on sub-frequency bands or subcarriers are mixed, and a mixed precoded data signal is sent.

In another embodiment of the present application, a central office is further provided, which includes the foregoing precoding processing device.

Embodiment nine

This embodiment provides a precoding processing device. The device includes a memory and a processor. The memory stores a program which, when read and executed by the processor, causes the processor to perform the operations below.

A precoding processing method for each sub-frequency band or subcarrier is determined according to a precoding selection parameter configured by a central office. The precoding processing method includes linear precoding and nonlinear precoding.

Decoding processing is performed, separately by using a decoding method corresponding to the determined precoding processing method, on a data signal carried on the each sub-frequency band or subcarrier.

Decoded data signals are mixed, and a mixed decoded data signal is output.

In an optional embodiment of the present application, when read and executed by the processor, the program causes the processor further to perform the following operations: a precoding operating mode to be adopted and a precoding related parameter are determined through negotiation with the central office. The precoding operating mode is a single precoding operating mode in which only one of linear precoding and nonlinear precoding is adopted, or a hybird operating mode in which both linear precoding and nonlinear precoding are adopted.

In an optional embodiment of the present application, a terminal is further provided, which includes the precoding processing device in embodiment nine.

In an optional embodiment of the present application, a storage medium is further provided. The storage medium stores computer-executable instructions. When the instructions are executed, the precoding processing method according to any one of the foregoing embodiments is performed.

The device and module described in embodiments of the present invention may also be stored in a computer-readable storage medium if implemented in the form of software function modules and sold or used as independent products. Based on this understanding, the solution provided by the present invention substantially, the part contributing to the existing art, or all or part of the solution, may be embodied in the form of a software product. The computer software product is stored on a storage medium, and includes several instructions for enabling a computer device (which may be a personal computer, a server, a network device or the like) to execute all or part of the steps in the methods provided by the embodiments of the present invention. The preceding storage medium includes: a USB flash drive, a read-only memory (ROM), a random access memory (RAM), a mobile hard disk, a magnetic disk, an optical disk or another medium capable of storing program codes.

**Claims**

1. A precoding processing method, comprising:

    selecting a precoding processing method for each of sub-frequency bands or each of subcarriers according to a preset policy, wherein the precoding processing method comprises linear precoding and nonlinear precoding;
    separately performing precoding processing, by using the selected precoding processing method, on a data signal carried on the each of the sub-frequency bands or the each of the subcarriers; and
    mixing precoded data signals carried on the sub-frequency bands or the subcarriers to obtain a mixed precoded data signal, and sending the mixed precoded data signal;
    wherein selecting the precoding processing method for the each of the sub-frequency bands or the each of the subcarriers according to the preset policy comprises selecting the precoding processing method for the each of the sub-frequency bands or the each of the subcarriers according to at least one of: network management configuration and a transmission performance parameter of a line in the each of the sub-frequency bands or the each of the subcarriers;
    **characterized in that**, wherein selecting the precoding processing method for the each of the sub-frequency bands or the each of subcarriers according to the transmission performance parameter of the line in the each of the sub-frequency bands or the each of the subcarriers comprises:

        in a system operational stage, for any sub-frequency band or any subcarrier supporting both the linear precoding and the nonlinear precoding, acquiring a first transmission performance parameter of one or more lines in a line vectoring group when a first precoding processing method that is currently used is applied to the any sub-frequency band or the any subcarrier; on condition that the first transmission performance parameter is smaller than a preset adjustment threshold, acquiring a second transmission performance parameter of the one or more lines when a second precoding processing method is applied to the any sub-frequency band or the any subcarrier; and on condition that the second transmission performance parameter is greater than the preset adjustment threshold, and the second transmission performance parameter is greater than the first transmission performance parameter, adjusting the precoding processing method for the any sub-frequency band or the any subcarrier to be the second precoding processing method, wherein
        the first precoding processing method is the linear precoding, and the second precoding processing method is the nonlinear precoding; or
        the first precoding processing method is the nonlinear precoding, and the second precoding processing method is the linear precoding.

2. The method according to claim 1, wherein
    the network management configuration comprises at least one of: an operating frequency band, and a precoding processing method supported by the each of the sub-frequency bands or each of the subcarriers within the operating frequency band.

3. The method according to claim 1, wherein selecting the precoding processing method for the each of the sub-frequency bands or the each of the subcarriers according to the transmission performance parameter of the line in the each of the sub-frequency bands or the each of the subcarriers comprises:
in a system initialization stage, for any sub-frequency band or any subcarrier supporting both the linear precoding and the nonlinear precoding, comparing a transmission performance parameter of one or more lines in a line vectoring group after nonlinear precoding processing is applied to the any sub-frequency band or the any subcarrier with a transmission performance parameter of the one or more lines after linear precoding processing is applied to the any sub-frequency band or the any subcarrier, and selecting one precoding processing method as the precoding processing method for the any sub-frequency band or the any subcarrier according to a precoding optimization policy.

4. The method according to claim 1, wherein the transmission performance parameter comprises at least one of: a net data rate, an attainable net data rate, an attainable data rate, a signal-to-noise ratio of the each of the sub-frequency bands or the each of the subcarriers, a maximum value of signal-to-noise ratios in the operating frequency band, a mean value of the signal-to-noise ratios in the operating frequency band, and a signal-to-noise margin in the operating frequency band.

5. The method according to any one of claims 1 to 3, wherein the method further comprises:
negotiating with a terminal to determine an adopted precoding operating mode and a precoding related parameter, wherein the adopted precoding operating mode is a single precoding operating mode in which only one of the linear precoding and the nonlinear precoding is adopted, or a hybrid precoding operating mode in which both the linear precoding and the nonlinear precoding are adopted.

6. The method according to claim 5, wherein when the adopted precoding operating mode is the hybrid precoding operating mode, the precoding related parameter comprises at least one of:
an operating frequency band supporting only the linear precoding, an operating frequency band supporting only the nonlinear precoding, an operating frequency band in which a precoding method is adaptively adjustable, an operating frequency band in which the linear precoding is initially adopted, and an operating frequency band in which the nonlinear precoding is initially adopted.

7. A precoding processing device, comprising a memory and a processor, wherein the memory stores a program which, when read and executed by the processor, causes the processor to perform the following operations:

selecting a precoding processing method for each of the sub-frequency bands or each of the subcarriers according to a preset policy, wherein the precoding processing method comprises linear precoding and nonlinear precoding;
separately performing precoding processing, by using the selected precoding processing method, on a data signal carried on the each of the sub-frequency bands or the each of the subcarriers; and
mixing precoded data signals carried on the sub-frequency bands or the subcarriers to obtain a mixed precoded data signal, and sending the mixed precoded data signal;
wherein selecting the precoding processing method for the each of the sub-frequency bands or the each of the subcarriers according to the preset policy comprises selecting the precoding processing method for the each of the sub-frequency bands or the each of the subcarriers according to at least one of: network management configuration and a transmission performance parameter of a line in the each of the sub-frequency bands or the each of the subcarriers;
**characterized in that**, wherein selecting the precoding processing method for the each of the sub-frequency bands or the each of the subcarriers according to the transmission performance parameter of the line in the each of the sub-frequency bands or the each of the subcarriers comprises:

in a system operational stage, for any sub-frequency band or any subcarrier supporting both the linear precoding and the nonlinear precoding, acquiring a first transmission performance parameter of one or more lines in a line vectoring group when a first precoding processing method that is currently used is applied to the any sub-frequency band or the any subcarrier; on condition that the first transmission performance parameter is smaller than a preset adjustment threshold, acquiring a second transmission performance parameter of the one or more lines when a second precoding processing method is applied to the any sub-frequency band or the any subcarrier; and on condition that the second transmission performance parameter is greater than the preset adjustment threshold, and the second transmission performance parameter is greater than the first transmission performance parameter, adjusting the precoding processing method for the any sub-frequency band or the any subcarrier to be the second precoding processing method, wherein

the first precoding processing method is the linear precoding, and the second precoding processing method is the nonlinear precoding; or

the first precoding processing method is the nonlinear precoding, and the second precoding processing method is the linear precoding.

8. A storage medium, storing computer-executable instructions, wherein when the instructions are executed, the precoding processing method according to any one of claims 1 to 6 is performed.


**Patentansprüche**

1. Verfahren zur Vorcodierungsverarbeitung, welches umfasst:

ein Auswählen eines Verfahrens zur Vorcodierungsverarbeitung für jedes der Unterfrequenzbänder oder jeden der Unterträger gemäß einer voreingestellten Richtlinie, wobei das Verfahren zur Vorcodierungsverarbeitung eine lineare Vorcodierung und eine nichtlineare Vorcodierung umfasst,

ein separates Durchführen einer Vorcodierungsverarbeitung mittels des ausgewählten Verfahrens zur Vorcodierungsverarbeitung an einem auf jedem der Unterfrequenzbänder oder jedem der Unterträger übertragenen Datensignal, und

ein Mischen vorcodierter Datensignale, die auf den Unterfrequenzbändern oder den Unterträgern übertragen werden, um ein gemischtes vorcodiertes Datensignal zu erhalten, und ein Senden des gemischten vorcodierten Datensignals,

wobei das Auswählen des Verfahrens zur Vorcodierungsverarbeitung für jedes der Unterfrequenzbänder oder jeden der Unterträger gemäß der voreingestellten Richtlinie ein Auswählen des Verfahrens zur Vorcodierungsverarbeitung für jedes der Unterfrequenzbänder oder jeden der Unterträger gemäß mindestens eines der folgenden Elemente umfasst: eine Netzwerkmanagementkonfiguration und ein Übertragungsleistungsparameter einer Leitung in jedem der Unterfrequenzbänder oder jedem der Unterträger,

**dadurch gekennzeichnet, dass** das Auswählen des Verfahrens zur Vorcodierungsverarbeitung für jedes der Unterfrequenzbänder oder jeden der Unterträger gemäß dem Übertragungsleistungsparameter der Leitung in jedem der Unterfrequenzbänder oder jedem der Unterträger umfasst:

in einer Systembetriebsstufe für jedes Unterfrequenzband oder jeden Unterträger, das bzw. der sowohl die lineare Vorcodierung als auch die nichtlineare Vorcodierung unterstützt, ein Erfassen eines ersten Übertragungsleistungsparameters einer oder mehrerer Leitungen in einer Leitungsvektorgruppe, wenn ein erstes Verfahren zur Vorcodierungsverarbeitung, das gegenwärtig verwendet wird, auf das beliebige Unterfrequenzband oder den beliebigen Unterträger angewendet wird, unter der Bedingung, dass der erste Übertragungsleistungsparameter kleiner als ein voreingestellter Einstellschwellenwert ist, ein Erfassen eines zweiten Übertragungsleistungsparameters der einen oder mehreren Leitungen, wenn ein zweites Verfahren zur Vorcodierungsverarbeitung auf das beliebige Unterfrequenzband oder den beliebigen Unterträger angewandt wird, und unter der Bedingung, dass der zweite Übertragungsleistungsparameter größer als der voreingestellte Anpassungsschwellenwert ist und der zweite Übertragungsleistungsparameter größer als der erste Übertragungsleistungsparameter ist, ein Anpassen des Verfahrens zur Vorcodierungsverarbeitung für das beliebige Unterfrequenzband oder den beliebigen Unterträger als das zweite Verfahren zur Vorcodierungsverarbeitung, wobei

das erste Verfahren zur Vorcodierungsverarbeitung die lineare Vorcodierung ist, und das zweite Verfahren zur Vorcodierungsverarbeitung die nichtlineare Vorcodierung ist, oder

das erste Verfahren zur Vorcodierungsverarbeitung die nichtlineare Vorcodierung ist, und das zweite Verfahren zur Vorcodierungsverarbeitung die lineare Vorcodierung ist.

2. Verfahren nach Anspruch 1, wobei
die Netzverwaltungskonfiguration mindestens eines der folgenden Elemente umfasst: ein Betriebsfrequenzband und ein Verfahren zur Vorcodierungsverarbeitung, das von jedem der Unterfrequenzbänder oder jedem der Unterträger innerhalb des Betriebsfrequenzbandes unterstützt wird.

3. Verfahren nach Anspruch 1, wobei das Auswählen des Verfahrens zur Vorcodierungsverarbeitung für jedes der Unterfrequenzbänder oder jeden der Unterträger gemäß dem Übertragungsleistungsparameter der Leitung in jedem der Unterfrequenzbänder oder jedem der Unterträger umfasst:

in einer Systeminitialisierungsstufe für jedes Unterfrequenzband oder jeden Unterträger, das bzw. der sowohl die lineare Vorcodierung als auch die nichtlineare Vorcodierung unterstützt, ein Vergleichen eines Übertragungsleistungsparameters einer oder mehrerer Leitungen in einer Leitungsvektorisierungsgruppe, nachdem die nichtlineare Vorcodierungsverarbeitung auf das beliebige Unterfrequenzband oder den beliebigen Unterträger angewendet worden ist, mit einem Übertragungsleistungsparameter der einen oder mehreren Leitungen, nachdem die lineare Vorcodierungsverarbeitung auf das beliebige Unterfrequenzband oder den beliebigen Unterträger angewendet worden ist und ein Auswählen eines Verfahrens zur Vorcodierungsverarbeitung als das Verfahren zur Vorcodierungsverarbeitung für das beliebige Unterfrequenzband oder den beliebigen Unterträger gemäß einer Richtlinie zur Vorcodierungsoptimierung.

4. Verfahren nach Anspruch 1, wobei der Übertragungsleistungsparameter mindestens eines der folgenden Merkmale umfasst:

   eine Nettodatenrate, eine erreichbare Nettodatenrate, eine erreichbare Datenrate, ein Signal-Rausch-Verhältnis für jedes der Unterfrequenzbänder oder jedes der Unterträger, einen Maximalwert der Signal-Rausch-Verhältnisse in dem Betriebsfrequenzband, einen Mittelwert der Signal-Rausch-Verhältnisse im Betriebsfrequenzband und eine Signal-Rausch-Spanne in dem Betriebsfrequenzband.

5. Verfahren nach einem der Ansprüche 1 bis 3, wobei das Verfahren ferner umfasst:

   ein Verhandeln mit einem Endgerät, um einen angenommenen Vorcodierungs-Betriebsmodus und einen vorcodierungsbezogenen Parameter zu bestimmen, wobei der angenommene Vorcodierungs-Betriebsmodus ein einzelner Vorcodierungs-Betriebsmodus, in dem nur eine der linearen Vorcodierung und der nichtlinearen Vorcodierung angenommen wird, oder ein hybrider Vorcodierungs-Betriebsmodus ist, in dem sowohl die lineare Vorcodierung als auch die nichtlineare Vorcodierung angenommen werden.

6. Verfahren nach Anspruch 5, wobei, wenn der angenommene Vorcodierungs-Betriebsmodus der Hybrid-Vorcodierungs-Betriebsmodus ist, der vorcodierungsbezogene Parameter mindestens einen der folgenden Elemente umfasst:

   ein Betriebsfrequenzband, das nur die lineare Vorcodierung unterstützt, ein Betriebsfrequenzband, das nur die nichtlineare Vorcodierung unterstützt, ein Betriebsfrequenzband, in dem ein Vorcodierungsverfahren adaptiv einstellbar ist, ein Betriebsfrequenzband, in dem die lineare Vorcodierung anfänglich übernommen wird, und ein Betriebsfrequenzband, in dem die nichtlineare Vorcodierung anfänglich übernommen wird.

7. Vorrichtung zur Vorcodierungsverarbeitung, die einen Speicher und einen Prozessor aufweist, wobei der Speicher ein Programm speichert, das, wenn es von dem Prozessor gelesen und ausgeführt wird, den Prozessor veranlasst, die folgenden Operationen durchzuführen

   ein Auswählen eines Verfahrens zur Vorcodierungsverarbeitung für jedes der Unterfrequenzbänder oder jeden der Unterträger gemäß einer voreingestellten Richtlinie, wobei das Verfahren zur Vorcodierungsverarbeitung eine lineare Vorcodierung und eine nichtlineare Vorcodierung umfasst,
   ein separates Durchführen einer Vorcodierungsverarbeitung mittels des ausgewählten Verfahrens zur Vorcodierungsverarbeitung an einem auf jedem der Unterfrequenzbänder oder jedem der Unterträger übertragenen Datensignal, und
   ein Mischen vorcodierter Datensignale, die auf den Unterfrequenzbändern oder den Unterträgern übertragen worden sind, um ein gemischtes vorcodiertes Datensignal zu erhalten, und ein Senden des gemischten vorcodierten Datensignals,
   wobei das Auswählen des Verfahrens zur Vorcodierungsverarbeitung für jedes der Unterfrequenzbänder oder jeden der Unterträger gemäß der voreingestellten Richtlinie ein Auswählen des Verfahrens zur Vorcodierungsverarbeitung für jedes der Unterfrequenzbänder oder jeden der Unterträger gemäß mindestens einem der folgenden Punkte umfasst: eine Netzwerkmanagementkonfiguration und ein Übertragungsleistungsparameter einer Leitung in jedem der Unterfrequenzbänder oder jedem der Unterträger,
   **dadurch gekennzeichnet, dass** das Auswählen des Verfahrens zur Vorcodierungsverarbeitung für jedes der Unterfrequenzbänder oder jeden der Unterträger gemäß dem Übertragungsleistungsparameter der Leitung in jedem der Unterfrequenzbänder oder jedem der Unterträger umfasst:

   in einer Systembetriebsstufe für jedes Unterfrequenzband oder jeden Unterträger, das bzw. der sowohl die

**EP 3 605 895 B1**

lineare Vorcodierung als auch die nichtlineare Vorcodierung unterstützt, ein Erfassen eines ersten Übertragungsleistungsparameters einer oder mehrerer Leitungen in einer Leitungsvektorgruppe, wenn ein erstes Verfahren zur Vorcodierungsverarbeitung, das gegenwärtig verwendet wird, auf das beliebige Unterfrequenzband oder den beliebigen Unterträger angewendet wird, unter der Bedingung, dass der erste Übertragungsleistungsparameter kleiner als ein voreingestellter Einstellschwellenwert ist, ein Erfassen eines zweiten Übertragungsleistungsparameters der einen oder mehreren Leitungen, wenn ein zweites Verfahren zur Vorcodierungsverarbeitung auf das beliebige Unterfrequenzband oder den beliebigen Unterträger angewandt wird, und unter der Bedingung, dass der zweite Übertragungsleistungsparameter größer als der voreingestellte Anpassungsschwellenwert ist und der zweite Übertragungsleistungsparameter größer als der erste Übertragungsleistungsparameter ist, ein Anpassen des Verfahrens zur Vorcodierungsverarbeitung für das beliebige Unterfrequenzband oder den beliebigen Unterträger als das zweite Verfahren zur Vorcodierungsverarbeitung, wobei

das erste Verfahren zur Vorcodierungsverarbeitung die lineare Vorcodierung ist, und das zweite Verfahren zur Vorcodierungsverarbeitung die nichtlineare Vorcodierung ist, oder

das erste Verfahren zur Vorcodierungsverarbeitung die nichtlineare Vorcodierung ist, und das zweite Verfahren zur Vorcodierungsverarbeitung die lineare Vorcodierung ist.

**8.** Speichermedium, das computerausführbare Anweisungen speichert, wobei, wenn die Anweisungen ausgeführt werden, das Verfahren zur Vorcodierungsverarbeitung nach einem der Ansprüche 1 bis 6 durchgeführt wird.

## Revendications

**1.** Procédé de traitement de précodage, comprenant :

la sélection d'un procédé de traitement de précodage pour chacune de sous-bandes de fréquences ou chacune de sous-porteuses selon une politique prédéfinie, dans lequel le procédé de traitement de précodage comprend un précodage linéaire et un précodage non linéaire ;
la mise en œuvre séparément d'un traitement de précodage au moyen du procédé de traitement de précodage sélectionné, sur un signal de données transporté sur chacune des sous-bandes de fréquences ou chacune des sous-porteuses ; et
le mélange de signaux de données précodés transportés sur les sous-bandes de fréquences ou les sous-porteuses pour obtenir un signal de données précodé mélangé, et l'envoi du signal de données précodé mélangé ;
dans lequel la sélection du procédé de traitement de précodage pour chacune des sous-bandes de fréquences ou chacune des sous-porteuses selon la politique prédéfinie comprend la sélection du procédé de traitement de précodage pour chacune des sous-bandes de fréquences ou chacune des sous-porteuses selon au moins un des éléments suivants : une configuration de gestion de réseau et un paramètre de performance de transmission d'une ligne dans chacune des sous-bandes de fréquences ou chacune des sous-porteuses ;
**caractérisé en ce que**, la sélection du procédé de traitement de précodage pour chacune des sous-bandes de fréquences ou chacune des sous-porteuses en fonction du paramètre de performance de transmission de la ligne dans chacune des sous-bandes de fréquences ou chacune des sous-porteuses comprend :

dans une phase de fonctionnement de système, pour une sous-bande de fréquences quelconque ou une sous-porteuse quelconque prenant en charge à la fois le précodage linéaire et le précodage non linéaire, l'acquisition d'un premier paramètre de performance de transmission d'une ou plusieurs lignes dans un groupe de vectorisation de lignes lorsqu'un premier procédé de traitement de précodage qui est actuellement utilisé est appliqué à la sous-bande de fréquences quelconque ou à la sous-porteuse quelconque ; à condition que le premier paramètre de performance de transmission est inférieur à un seuil de réglage prédéfini, l'acquisition d'un deuxième paramètre de performance de transmission des une ou plusieurs lignes lorsqu'un deuxième procédé de traitement de précodage est appliqué à la sous-bande de fréquences quelconque ou à la sous-porteuse quelconque ; et à condition que le deuxième paramètre de performance de transmission est supérieur au seuil de réglage prédéfini, et que le deuxième paramètre de performance de transmission est supérieur au premier paramètre de performance de transmission, le réglage du procédé de traitement de précodage pour la sous-bande de fréquences quelconque ou la sous-porteuse quelconque comme étant le deuxième procédé de traitement de précodage, dans lequel
le premier procédé de traitement de précodage est le précodage linéaire, et le deuxième procédé de traitement de précodage est le précodage non linéaire ; ou

21

le premier procédé de traitement de précodage est le précodage non linéaire, et le deuxième procédé de traitement de précodage est le précodage linéaire.

2. Procédé selon la revendication 1, dans lequel
la configuration de gestion de réseau comprend au moins un élément parmi : une bande de fréquences de fonctionnement et un procédé de traitement de précodage pris en charge par chacune des sous-bandes de fréquences ou chacune des sous-porteuses dans la bande de fréquences de fonctionnement.

3. Procédé selon la revendication 1, dans lequel la sélection du procédé de traitement de précodage pour chacune des sous-bandes de fréquences ou chacune des sous-porteuses en fonction du paramètre de performance de transmission de la ligne dans chacune des sous-bandes de fréquences ou chacune des sous-porteuses comprend : dans une phase d'initialisation de système, pour une sous-bande de fréquences quelconque ou une sous-porteuse quelconque prenant en charge à la fois le précodage linéaire et le précodage non linéaire, la comparaison d'un paramètre de performance de transmission d'une ou plusieurs lignes dans un groupe de vectorisation de lignes après qu'un traitement de précodage non linéaire est appliqué à la sous-bande de fréquences quelconque ou à la sous-porteuse quelconque avec un paramètre de performance de transmission des une ou plusieurs lignes après qu'un traitement de précodage linéaire est appliqué à la sous-bande de fréquences quelconque ou à la sous-porteuse quelconque, et la sélection d'un procédé de traitement de précodage en tant que procédé de traitement de précodage pour la sous-bande de fréquences quelconque ou la sous-porteuse quelconque selon une politique d'optimisation de précodage.

4. Procédé selon la revendication 1, dans lequel le paramètre de performance de transmission comprend au moins un élément parmi : un débit de données net, un débit de données net atteignable, un débit de données atteignable, un rapport signal sur bruit de chacune des sous-bandes de fréquences ou de chacune des sous-porteuses, une valeur maximale de rapports signal sur bruit dans la bande de fréquences de fonctionnement, une valeur moyenne des rapports signal sur bruit dans la bande de fréquences de fonctionnement, et une marge de signal sur bruit dans la bande de fréquences de fonctionnement.

5. Procédé selon l'une quelconque des revendications 1 à 3, dans lequel le procédé comprend en outre :
la négociation avec un terminal pour déterminer un mode de fonctionnement de précodage adopté et un paramètre associé au précodage, dans lequel le mode de fonctionnement de précodage adopté est un mode de fonctionnement de précodage unique dans lequel seul l'un parmi le précodage linéaire et le précodage non linéaire est adopté, ou un mode de fonctionnement de précodage hybride dans lequel à la fois le précodage linéaire et le précodage non linéaire sont adoptés.

6. Procédé selon la revendication 5, dans lequel, lorsque le mode de fonctionnement de précodage adopté est le mode de fonctionnement de précodage hybride, le paramètre associé au précodage comprend au moins un élément parmi : une bande de fréquences de fonctionnement prenant en charge uniquement le précodage linéaire, une bande de fréquences de fonctionnement prenant en charge uniquement le précodage non linéaire, une bande de fréquences de fonctionnement dans laquelle un procédé de précodage est réglable de manière adaptative, une bande de fréquences de fonctionnement dans laquelle le précodage linéaire est initialement adopté, et une bande de fréquences de fonctionnement dans laquelle le précodage non linéaire est initialement adopté.

7. Dispositif de traitement de précodage, comprenant une mémoire et un processeur, dans lequel la mémoire stocke un programme qui, lorsqu'il est lu et exécuté par le processeur, amène le processeur à effectuer les opérations suivantes :

la sélection d'un procédé de traitement de précodage pour chacune de sous-bandes de fréquences ou chacune de sous-porteuses selon une politique prédéfinie, dans lequel le procédé de traitement de précodage comprend un précodage linéaire et un précodage non linéaire ;
la mise en œuvre séparément d'un traitement de précodage au moyen du procédé de traitement de précodage sélectionné, sur un signal de données transporté sur chacune des sous-bandes de fréquences ou chacune des sous-porteuses ; et
le mélange de signaux de données précodés transportés sur les sous-bandes de fréquences ou les sous-porteuses pour obtenir un signal de données précodé mélangé, et l'envoi du signal de données précodé mélangé ;
dans lequel la sélection du procédé de traitement de précodage pour chacune des sous-bandes de fréquences ou chacune des sous-porteuses selon la politique prédéfinie comprend la sélection du procédé de traitement de précodage pour chacune des sous-bandes de fréquences ou chacune des sous-porteuses selon au moins un des éléments suivants : une configuration de gestion de réseau et un paramètre de performance de transmission d'une ligne dans chacune des sous-bandes de fréquences ou chacune des sous-porteuses ; **caractérisé en ce que**, la sélection du procédé de traitement de précodage pour chacune des sous-bandes de fréquences ou chacune des sous-porteuses en fonction du paramètre de performance de transmission de la ligne dans chacune des sous-bandes de fréquences ou chacune des sous-porteuses comprend :

dans une phase de fonctionnement de système, pour une sous-bande de fréquences quelconque ou une sous-porteuse quelconque prenant en charge à la fois le précodage linéaire et le précodage non linéaire, l'acquisition d'un premier paramètre de performance de transmission d'une ou plusieurs lignes dans un groupe de vectorisation de lignes lorsqu'un premier procédé de traitement de précodage qui est actuellement utilisé est appliqué à la sous-bande de fréquences quelconque ou à la sous-porteuse quelconque ; à condition que le premier paramètre de performance de transmission est inférieur à un seuil de réglage prédéfini, l'acquisition d'un deuxième paramètre de performance de transmission des une ou plusieurs lignes lorsqu'un deuxième procédé de traitement de précodage est appliqué à la sous-bande de fréquences quelconque ou à la sous-porteuse quelconque ; et à condition que le deuxième paramètre de performance de transmission est supérieur au seuil de réglage prédéfini, et que le deuxième paramètre de performance de transmission est supérieur au premier paramètre de performance de transmission, le réglage du procédé de traitement de précodage pour la sous-bande de fréquences quelconque ou la sous-porteuse quelconque comme étant le deuxième procédé de traitement de précodage, dans lequel

le premier procédé de traitement de précodage est le précodage linéaire, et le deuxième procédé de traitement de précodage est le précodage non linéaire ; ou

le premier procédé de traitement de précodage est le précodage non linéaire, et le deuxième procédé de traitement de précodage est le précodage linéaire.

8. Support de stockage, stockant des instructions exécutables par ordinateur, dans lequel, lorsque les instructions sont exécutées, le procédé de traitement de précodage selon l'une quelconque des revendications 1 à 6 est effectué.

104

Precoding processing module 1041

1041

Linear-precoding central-office
processing module

103

Initial data
signal

Central-office
precoding selection
module

105

Precoded data
signal

Central-office data-
signal mixing module

1042

Nonlinear-precoding central-
office processing module

102

Central-office precoding controller

101

Central-office management entity

**FIG. 1**

204

Decoding module

Linear-precoding terminal
processing module

205

Processed
data signal

Input
noise

203

Terminal data-
signal mixing
module

Received
data signal

Terminal
precoding
selection module

2041

2042

Nonlinear-precoding terminal
processing module

202

Synchronization control module

201

Terminal management entity (ME)

**FIG. 2**

**FIG. 3**

**FIG. 4**

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015244418 A1

**Non-patent literature cited in the description**

- *International Telecommunication Union,* 21 March 2012, vol. 4a/15, 1-5